(19) Europäisches Patentamt
European Patent Office
Office européen des brevets

(11) **EP 1 665 631 B1**

(12) **EUROPÄISCHE PATENTSCHRIFT**

(45) Veröffentlichungstag und Bekanntmachung des Hinweises auf die Patenterteilung:
**04.11.2009 Patentblatt 2009/45**

(21) Anmeldenummer: **04787116.5**

(22) Anmeldetag: **09.09.2004**

(51) Int Cl.:
*H04L 12/14* *(2006.01)*      *H04L 12/26* *(2006.01)*

(86) Internationale Anmeldenummer:
**PCT/EP2004/052105**

(87) Internationale Veröffentlichungsnummer:
**WO 2005/029768 (31.03.2005 Gazette 2005/13)**

(54) **VERFAHREN ZUR EFFEKTIVZEITMESSUNG EINER DATENÜBERTRAGUNG IN EINEM PAKETBASIERTEN NETZWERK**

METHOD FOR MEASURING THE EFFECTIVE TIME OF DATA TRANSMISSION IN A PACKET-BASED NETWORK

PROCEDE POUR MESURER LA DUREE REELLE D'UNE TRANSMISSION DE DONNEES DANS UN RESEAU ORIENTE PAQUETS

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.09.2003 DE 10343764**

(43) Veröffentlichungstag der Anmeldung:
**07.06.2006 Patentblatt 2006/23**

(73) Patentinhaber: **Nokia Siemens Networks GmbH & Co. KG**
**81541 München (DE)**

(72) Erfinder:
• **BÖHME, Olaf**
  **12439 Berlin (DE)**
• **ENGEL, Thomas**
  **12053 Berlin (DE)**
• **HICKETHIER, Thomas**
  **13086 Berlin (DE)**

(56) Entgegenhaltungen:
EP-A- 1 054 529      WO-A-99/65186
WO-A2-99/57856      DE-A- 19 755 870
US-A- 5 828 737      US-A1- 2002 150 054

## Beschreibung

Die vorliegende Erfindung betrifft ein Verfahren zur Zeitmessung einer bidirektionalen während einer Zeitspanne stattfindenden Datenübertragung in Form von Datenpaketen über ein IP-Netz zwischen einem ersten IP-Endpunkt und einem zweiten IP-Endpunkt. Derartige Verfahren werden insbesondere für die Ermittlung von anfallenden Gebühren bei einer paketbasierten Kommunikation benötigt. Es existieren bereits Zeit- und Volumenmessverfahren nach 3GPP Standard in den paketbasierten, das heißt den sogenannten "packet switched (PS)" Netzwerken. Diese Messverfahren und die darauf aufsetzenden Tarifmodelle für paketbasierte (PS-) Dienste, wie beispielsweise GPRS, besitzen wesentliche Nachteile, so dass keines der bisher bekannten Messverfahren als Optimum angesehen werden kann.

WO 99/65186 A1 beschreibt ein System zur Vergebührung unter der Verwendung eines paketvermittelndes Telekommunikationsnetzes. Eine Messeinheit misst die Anzahl der Dateneinheiten in einem Zeitabschnitt (T) oder einem Zeitabschnitt (t) zwischen einer Anzahl (N) von Dateneinheiten. Auf jeden Fall ist der Zeitabschnitt in Relation kleiner als die Gesamtzeit der Verbindung. Eine Berechnungseinheit berechnet pro Zeitabschnitt die Anzahl der Dateneinheiten pro Zeiteinheit und übermittelt das Berechnungsresultat zu einer Vergebührungseinheit. Falls das Telekommunikationssystem System-Dateneinheiten aufweist, welche mit einem Indikator versehen sind, können diese auch an die Vergebührungseinheit übermittelt werden.

DE 197 55 870 A1 beschreibt eine automatische Kostenerfassung bei Inanspruchnahme von Diensten in Rechnernetzen, z. B. Internet, durch Erfassung der übertragenen Datenmenge und/oder der Zeitdauer mit Anzeige der durchaus resultierenden Kosten auf dem Bildschirm des einen Dienst ansteuernden Rechners. Das ist Kostenerfassung steuernde Programm ist in den Netzwerktreiber des Rechners eingebunden. Beschränkung der Kostenerfassung auf die Ansteuerung einer der vorgegebenen Zugangsvermittlungen und eines der vorgegebenen Dienste oder Ports.

WO 99/57856 A2 hat als Zielsetzung eine ungerechtfertigte Vergebührung für die Zeitdauer vom kundenseitig empfundenen Ende einer Verbindung bis zum effektiven Timeout der Verbindung zu verhindern. Um dies zu erreichen schlägt dieses Dokument ein Verfahren vor, bei welchem ein Timer counter die Zeitdauer ($\Delta t$) zwischen zwei nachfolgenden Paketen mißt, während ein zweiter Timer durch die Werte ($\Delta t$) aufdatiert wird. Dadurch löst es das Problem, die Zeitspanne zwischen dem kundenseitig empfundenen Abbruch eines Dienstes und dem effektiven Ende der Verbindung (durch ein Timeout-Signal) nicht zu vergebühren. Allerdings werden bei der Lösung von WO 99/57856 Unterbrüche vergebührt, welche nicht am (zeitlichen) Ende der Verbindung stattfinden, sondern während der (zeitlichen) Mitte der Verbindung, beispielsweise Unterbrüche, welche während eines VoIP-Gesprächs aufgrund einer Tunnelfahrt stattfinden.

Ein großer Nachteil der bisherigen Messverfahren und der daran gekoppelten Gebührenerfassung besteht darin, dass dadurch keine vergleichbare Tariffierung in paketbasierten (PS-) Netzwerken zu bestehenden leitungsvermittelten, das heißt sogenannten "circuit switched (CS)" Netzwerken ermöglicht wird. Bei den Telekommunikationsbetreibern wird eine paketbasierte, das heißt eine sogenannte "packet switched (PS)" Netzwerkarchitektur als zusätzliche Technik zu den bestehenden CS Netzwerken betrieben. Alle Telekommunikationsbetreiber bieten neben der GSM Technik auch Dienste über eine PS Domain an, wie beispielsweise GPRS, inklusive Internet Service Provider (ISP) Subsysteme wie beispielsweise WAP (Wireless Application Protocol), MMS (Mulitmedia Messaging Service) und IMS (Interactive Multimedia Services). Ein Teilnehmer verwendet je

nach Dienst die verschiedenen Architekturen; auch ein Koppeln, ein sogenanntes "Interworking" der verschiedenen Architekturen ist denkbar. Andererseits werden gleichartige Dienste, wie beispielsweise Daten- und Sprachdienste über die beiden grundlegenden Architekturen durchgeführt. Folglich ist es insbesondere für gleichartige Dienste zwingend notwendig vergleichbare Vergebührungsmodelle und Tarife dem Teilnehmer anzubieten. In CS-Netzwerken werden für Rufe, Faxe und Datendienste ausschließlich Zeit-basierende Vergebührungsmodelle für die geschalteten Verbindungen unabhängig vom Volumen des Nutzdatenverkehrs angewandt. In PS-Netzwerken, wie beispielsweise in GPRS-Netzen, werden hingegen im wesentlichen Volumen-basierende Vergebührungsmodelle angeboten. Zweck dabei ist es, entsprechend der PS-Netzwerk Ressourcen Bereitstellung nutzungsabhängige und damit günstigere Preismodelle anzubieten. Es erweist sich aktuell, dass es für einen Betreiber schwierig ist, adäquate Preismodelle beispielsweise für GPRS-Dienste im Vergleich zu den etablierten CS-Diensten anzubieten.

Aufgrund der existierenden Zeit- und Volumenmessverfahren gibt es bisher keine nutzungsabhängige und gleichzeitig System-unabhängige Messgröße für eine Gebührenfestlegung. In PS-Netzwerken ist eine nutzungsabhängige Tariffierung zwingend notwendig, da die Netzwerk-Ressorucen nicht wie bei CS-Netzwerken einem Teilnehmer dauerhaft zugewiesen werden, sondern nach Bedarf bereitgestellt werden und mit mehreren Teilnehmern geteilt werden. Dabei sollen effektiv kurze Dienste sowie auch längere "online" Zeiten preisgünstig angeboten werden.

Die Zeit-basierenden Messverfahren haben den Vorteil, dass dabei eine kontinuierliche Messgröße verwendet wird. Ferner ist die erzielbare Genauigkeit, Kontrollierbarkeit und Nachvollziehbarkeit relativ hoch. Ein wesentlicher Nachteil liegt jedoch darin, dass die erfasste Zeit keine nutzungsabhängige Messgröße ist. Es erfolgt demnach eine Erfassung einer "statischen" Ressourcenbereitstellung bzw. -reservierung basierend auf einer Trägerauf- und -abbausignalisierung. Da keine allgemeingültige Lösung zur Signalisierung von Inaktivitäten existiert, werden diese inaktiven Phasen über die Zeit ebenfalls als gebührenrelevant erfasst.

Demgegenüber ist ein wesentlicher Vorteil der Volumenbasierenden Messverfahren in der Nutzungsabhängigkeit, das heißt in der effektiven Verwendung der Verbindung bzw. des Trägers zu sehen. Ein Nachteil von Volumenerfassung im Gegensatz zur Zeiterfassung ist eine starke Systemabhängigkeit. Das bedeutet, dass Parameter, wie beispielweise die Netzwerk- und Protokollarchitektur, die Verbindungsqualität und die Signalisierung aber auch die Lage des Messpunktes, auf welche der Teilnehmer keinen Einfluss hat, Auswirkungen auf die in Rechnung gestellte Volumenmenge haben. Insofern ist vor allem die angemessene Genauigkeit wie auch die Nachvollziehbarkeit ein schwieriges Thema.

Bei der heutigen Gebührenberechnung liegen diese zwei unabhängig voneinander arbeitenden Messungen für Zeit und Übertragungsvolumen zugrunde. Je nach Tarifmodell werden die Ergebnisse der Messungen unabhängig voneinander bewertet.

Ein weiteres Problem zeigt sich darin, dass es in einem PS-Netzwerk nicht möglich ist, eine applikationsabhängige Auswahl der Messmethode, das heißt ob Zeit oder Volumen, zu machen. Ein Dienst wie WAP oder Web-Surfen mit wenig Datenverkehr aber langen Zugangszeiten ist über die Volumenerfassung kostengünstiger. Bei Voice over IP (VoIP) oder Video-Streaming würde das Volumen von Parametern, wie beispielsweise Gesprächsintensität, Protokollfunktion bzw. von Umgehungsgeräuschen abhängen, so dass man derartige Dienste nur über die Zeit abrechnen kann.

Mit der sich entwickelnden Technik wird die Leistungsfähigkeit der Netzknoten und Endgeräte immer besser und folglich werden kontinuierlich immer höhere Datenraten und -mengen möglich. Erst die steigende Leistungsfähigkeit werden Streaming Applikationen möglich machen. Andererseits wird es immer Applikationen geben, die solch hohe Ansprüche nicht haben. Somit ist es notwendig, Tarife festzulegen, die einerseits auch bei Niedrig-Volumen Diensten für den Betreiber rentabel sind und andererseits bei Hoch-Volumen Diensten für den Teilnehmer bezahlbar bleiben. Die fehlende Dienstkenntnis im PS-Netzwerk macht es schwer das Volumen dementsprechend zu bewerten.

Bei einer Zeitmessung im PS-Netzwerk wiederum stellt sich das Problem der Verhinderung von ungerechtfertigter Vergebührung im Falle von Funkverbindungsunterbrechung bzw. -verlust. Das aktuelle Zeitmessverfahren erweist sich aufgrund fehlender Protokollunterstützung als untauglich für Zeitgenauigkeiten im Sekunden- bzw. Minutenbereich. Die in einem PS-Netzwerk gemessene Zeitdauer entspricht einer Trägerprotokoll (GTP) Ressourcen-Bereitstellung aber nicht einer tatsächlichen Verbindungsverfügbarkeit. Das bedeutet, dass derzeit die gesamte "statische" Bereitstellung des Trägers gemessen wird, nicht aber die "dynamische" effektive Verbindungszeit. Im Falle eines Funkinterface-Verlustes, wie beispielsweise bei Tunnelfahrten, bleiben die Netzwerk-Ressourcen im PS-Netzwerk aktiviert, um eventuelle Re-Synchronisationen zu unterstützen. Es gibt keine einheitliche Protokollfunktion unabhängig von der Verkehrsintensität, welche die Verbindung ständig testet und bei Verbindungsverlust unmittelbar meldet bzw. die Verbindung beendet. Dadurch kann ein Verbindungsverlust nur während eines quittierten Datenverkehrs, das heißt beispielsweise durch ein Trägerprotokoll, in Richtung einer entsprechenden Mobilstation unmittelbar erkannt werden. Hingegen bei allen anderen Verbindungssituationen liegen die Systemreaktionen in zu großen Verzögerungsbereichen, die es unmöglich machen, den genauen Zeitpunkt der verlorenen Verbindung zu erkennen. Bei GPRS beispielsweise werden erst nach ungefähr einer Stunde die Netzwerk-Ressourcen endgültig ausgelöst, wenn keine Datenübertragung hin zu der entsprechenden Mobilstation zwischenzeitlich erfolgt. Bei UMTS kann es sich sogar um mehrere Tage handeln. In CS-Netzwerken hingegen ist es garantiert, dass im Falle eines Luftinterface-Verlustes unmittelbar danach die Verbindung und damit die Zeiterfassung beendet wird.

Soll die Dauer einer Datenübertragung, das heißt eines sogenannten IP Flows erfasst werden, ist die Ermittlung des Start- und Endzeitpunktes notwendig. Bislang ist es aber nur möglich, den Startzeitpunkt durch das erstmalige Auftreten eines entsprechend adressierten Datenpaketes bzw. eines IP Paketes zu ermitteln, aber nicht das letzte Datenpaket bzw. IP Paket.

In mobilen PS-Netzwerken, wie beispielsweise GPRS, gibt es derzeit keine Erfassung einer effektiven Zeit, das heißt der Zeitdauer, während welcher tatsächlich Datenpakete übertragen werden.

Es war nunmehr eine Aufgabe der vorliegenden Erfindung ein Verfahren bereitzustellen, mit Hilfe dessen es möglich wird, eine effektive Zeitdauer einer Datenübertragung zu messen.

Diese Aufgabe wird gelöst durch die Merkmale von Anspruch 1. Weitere vorteilhafte Ausführungsformen werden in den entsprechenden Unteransprüchen aufgeführt.

Gemäß Anspruch 1 wird ein Verfahren zur Effektivzeitmessung einer bidirektionalen während einer Zeitspanne stattfindenden Datenübertragung in Form von Datenpaketen über ein paketbasiertes Netzwerk, insbesondere ein IP-Netz zwischen einem ersten Endpunkt, insbesondere einem IP-Endpunkt und einem zweiten Endpunkt, insbesondere einem IP-Endpunkt bereitgestellt, wobei an mindestens einer Erfassungsstelle am Übertragungskanal zwischen dem ersten und dem zweiten Endpunkt für die aus einer Mehrzahl von Zeitintervallen bestehenden Zeitspanne der bidirektionalen Datenübertragung alle Zeitintervalle erfasst werden, in welchen Datenpakete zwischen dem ersten und dem zweiten Endpunkt übertragen werden, wobei die Zahl der Zeitintervalle, in welchen Datenpakete zwischen dem ersten und dem zweiten IP-Endpunkt übertragen werden, bestimmt und als Maß für eine Vergebührung der bidirektionalen Datenübertragung verwendet.

Vorzugsweise handelt es sich bei dem ersten IP Endpunkt um eine Mobilstation eines Teilnehmers.

Gegenüber dem bisherigen Zeitmessverfahren wird nur die Zeit bzw. die Zeitintervalle erfasst, in der auch wirklich Daten bzw. Datenpakete übertragen werden. Somit hat diese Messgröße alle Vorteile der Zeit und ist zusätzlich auch nutzungsabhängig. Da bei den paketbasierten Netzwerken, das heißt bei den PS-Netzwerken in übertragungsinaktiven Phasen die Ressourcen nicht wie bei CS-Netzwerken beansprucht werden, soll sich auch die Gebührenerhebung anpassen. Ein wesentlicher Vorteil des erfindungsgemäßen Verfahrens ist es, dass die übertragungsaktiven Phasen erstens überhaupt und zweitens getrennt von der existierenden Zeitmessung erfasst werden. In den übertragungsaktiven Phasen ist die Verfügbarkeit der Verbindung durch vorhandene Protokoll-Quittierungsmechanismen in einem entsprechenden Träger bzw. einer entsprechenden Applikation überprüfbar. Hingegen werden die übertragungsinaktiven Phasen, in denen es auch unmöglich ist, den Verbindungszustand unmittelbar zu ermitteln, nicht von der effektiven Zeitmessung gemäß dem erfindungsgemäßen Verfahren erfasst.

Mittels des erfindungsgemäßen Verfahrens ist es möglich für einen Betreiber vergleichbare Messungen und Tariffierung von PS-Diensten gegenüber den CS-Diensten durchzuführen. Die gemessene Effektivzeit ist mit der Belegungsdauer von CS-Verbindungen vergleichbar. Im Extremfall kann die Effektivzeit maximal der Ressourcenbereitstellung für die entsprechende Übertragung gleich kommen. Dies hängt aber von der Verkehrsaktivität, das bedeutet von der Datenübertragung, im Verhältnis zu der Größe der Intervalle sowie von der Verbindungsverfügbarkeit ab.

In einer besonders bevorzugten Ausführungsform des erfindungsgemäßen Verfahrens haben die Zeitintervalle jeweils eine definierte und einstellbare Länge.

Ein weiterer Vorteil des erfindungsgemäßen Verfahrens ist darin zu sehen, dass die erfasste Effektivzeit gleichzeitig auch nutzungsabhängig ist, da die Messung durch die Datenübertragung des Teilnehmers getriggert wird und nicht wie bei der bisherigen Zeitmessmethode durch eine Signalisierung einer aufzubauenden Verbindung bzw. eines sogenannten PDP Kontextes. Die Effektivzeit spiegelt die effektive Nutzungszeit der Luft- und Netzwerkressourcen durch den Teilnehmer wieder.

Ferner kann das erfindungsgemäße Verfahren bei allen Arten von Diensten unabhängig von deren Kenntnis, das heißt unabhängig davon ob WAP, Web-Surfen, VoIP oder Video Streaming im Netzwerk übertragen wird, angewendet werden.

Durch die Erfassung und Zählung von Effektivzeitintervallen mit entsprechend definierter Intervallgröße ist es dem Betreiber möglich, einerseits für Niedrig-Volumen-Dienste bzw. sporadische Verkehrsaktivitäten einen Mindestbetrag zu erzielen, andererseits für Hoch-Volumen Dienste bzw. kontinuierliche Verkehrsaktivitäten nicht zu hohe Kosten einzufordern, weil dies die Nutzungshäufigkeit dieser Dienste wieder einschränken würde. Das bedeutet, dass sich die Kosten einer Datenverbindung über die Anzahl und Größe der genutzten Effektivzeitintervalle ermitteln lassen. Dadurch relativieren sich auch die Kosten der extremen Dienstszenarien. Die gemessene Effektivzeit wird im wesentlichen immer kleiner bzw. dann maximal gleich der bisher gemessenen Datenverbindungsdauer, das heißt der Dauer der Bereitstellung von PDP Kontext Ressourcen.

Ein weiterer wesentlicher Vorteil der vorliegenden Erfindung ist darin zu sehen, dass durch Messung von Effektivzeitintervallen Phasen von Verbindungsunterbrechungen und -abbrüchen nicht als kostenpflichtige Zeit erfasst werden. Da übertragungsinaktive Phasen in der Effektivzeitmessung nicht erfasst werden, ist auch der Verbindungszustand gebührenbezogen uninteressant. Hingegen wird bei übertragungsaktiven Phasen unmittelbar durch vorhandene Protokoll-Quittierungen der Verbindungszustand getestet. Im Falle eines Verbindungsverlustes können in Richtung zur Mobilstation des Teilnehmers, das heißt in sogenannter Uplink-Richtung keine Daten transportiert werden und in umgekehrter Richtung, das heißt in sogenannter Downlink-Richtung bleiben die vorhandenen Protokoll-quittierungen aus. Somit werden auch keine Zeitintervalle gemessen. Tunnelfahrten oder Tiefgaragenzeiten aber auch Nutzerinaktivitäten sind nicht Bestandteil der erfassten Effektivzeit. Dadurch wird es möglich korrekte verbindungszeitabhängige Tarifmodelle einerseits und "Always Online" Dienste andererseits kostengünstig anbieten zu können.

Das erfindungsgemäße Verfahren benötigt keine unmittelbare Verbindungsende-Signalisierung. Ähnlich wie bei der Problematik des Luftinterface-Verlustes ist es bei der Zeitmessung von IP-Flows in Netzelementen ohne Protokoll-Kenntnisse. Da die Effektivzeitmessung durch die zugehörige Datenübertragung getriggert wird, werden auch hier nur die realen Verkehrphasen gemessen.

Ferner ist es vorteilhaft, dass aus der gemessenen Effektivzeit in Verbindung mit dem gemessenen übertragenen Datenvolumen eine durchschnittliche Datenrate der Verbindung ermittelt werden kann. Die durchschnittliche Datenrate kann nur auf Basis der Effektivzeit als Netto-Übertragungszeit ermittelt werden. Somit können erstmalig kombinierte Preismodelle bestehend aus Verbindungszeit und genutzter Datenrate definiert werden. Dieser Wert ist eine relative Größe wie beispielsweise Geschwindigkeit oder Leistung. Durch die Relativierung spielen erfasste Volumen-Ungenauigkeiten aufgrund von Signalisierung, Übertragungswiederholungen bzw. -verlusten eine untergeordnete Rolle. Die Datenrate liefert im Gegensatz zum absoluten Volumenbetrag eine angemessene Genauigkeit.

In einer besonders bevorzugten Ausführungsform des erfindungsgemäßen Verfahrens wird jedes der Zeitintervalle, in welchen Datenpakete zwischen dem ersten und dem zweiten IP-Endpunkt übertragen werden, als eine Gebühreneinheit verwendet. Im Bereich der Telekommunikation ist es üblich eine Verbindungsnutzung nach Intervallen, das heißt nach Gebühreneinheiten zu diskretisieren. Somit werden zwar einerseits Mindestgebühren erhoben, andererseits aber auch der Anspruch an eine lieferbare Genauigkeit gesenkt. Ein Betreiber definiert nun die Größe eines Effektivzeitintervalls. Die Größe eines Effektivzeitintervalls entspricht dabei vorzugsweise einer Gebühreneinheit. Sinnvolle Intervallgrößen sind dabei ≥ 1s. Zu Beginn einer Datenübertragung wird von dem ersten zu übertragenden Datenpaket ein Effektivzeitintervall getriggert und damit aktiviert. Datenpakete, die innerhalb eines aktivierten Effektivzeitintervalls übertragen werden, haben keinen Einfluss auf die laufende Effektivzeitmessung. Erst nach Ablauf eines Effektivzeitintervalls führt das nächste Datenpaket zur Aktivierung eines neuen Effektivzeitintervalls. Für die Dauer der Datenübertragung werden die Effektivzeitintervalle gezählt und über ihre Größe kann dann auch die Zeitdauer der Datenübertragung, als Effektivzeit bezeichnet, ermittelt werden. Die Anzahl der Effektivzeitintervalle bzw. die abgeleitete Effektivzeit dient nun als Basis für die Gebührenfestlegung.

In einer weiteren bevorzugten Ausführungsform des erfindungsgemäßen Verfahrens wird die Zahl der übertragenen Datenpakete der bidirektionalen Datenübertragung erfasst und zusammen mit der Zahl der Effektivzeitintervalle einer arithmetischen Verarbeitung unterzogen wird. Dabei entspricht die arithmetische Verarbeitung vorzugsweise einer Quotientenbildung, wobei der Dividend gleich dem den übertragenen Datenpaketen entsprechenden Datenvolumen und der Divisor gleich einem Produkt aus der Zahl der Effektivzeitintervalle und der Größe der Effektivzeitintervalle, das heißt der Effektivzeit ist. Über die Effektivzeit sowie einem entsprechend erfassten Volumen kann nun eine durchschnittliche Datenrate als Gebührenkriterium ermittelt werden.

Die Effektivzeitintervallgrößen sind variabel einstellbar, vorzugsweise 1s, 10s, 60s oder größer. Es sind dabei gleiche aber auch unterschiedliche Effektivzeitintervallgrößen möglich. Beispielsweise kann das Anfangsintervall größer als die Folgeintervalle sein.

Ferner können die Effektivzeit bzw. die Zahl der Effektivzeitintervalle und die durchschnittliche Datenrate beispielsweise in Abhängigkeit der verwendeten Verkehrsbedingungen wie beispielsweise QoS (Quality of Service) Parameter oder Tagestarif getrennt gemessen werden und via CDR (Charging Data Record) bzw. CAMEL (Customer Applications for Mobile Network Enhanced Logic), Diameter oder Radius ausgegeben werden. Ferner können die Effektivzeitintervallgrößen je nach Teilnehmerzugehörigkeit und Verkehrssituation unterschiedlich zugewiesen werden. Dies kann beispielsweise in Abhängigkeit der Art, der Betreiberzugehörigkeit und dem Aufenthaltsort des Teilnehmers oder der Tarifzeit, der QoS Klasse oder des Verbindungszieles erfolgen.

Darüber hinaus können die Effektivzeitintervalle entweder getrennt oder zusammen für Up- und Downlink-Richtungen getriggert und aktiviert werden. Entsprechendes gilt auch für die darauf aufsetzende Datenratenermittlung.

Ferner ist es möglich parallele Messungen mit unterschiedlichen Effektivzeitintervallgrößen durchzuführen, beispielsweise größere Intervalle für die Effektivzeitmessung und kurze Intervalle zur Ermittlung der durchschnittlichen Übertragungsdatenrate.

Eine Effektivzeitmessung bzw. Effektivzeitintervallmessung kann optional, sofern eine entsprechende Protokollsignalisierung vorhanden ist, auch bereits mit dem Datenverbindungs-Start, das heißt mit einer PDP Kontext Aktivierung, getriggert werden, um so pro aktivierter Datenverbindung ein Mindest-Intervall berechnen zu können.

Für länger andauernde Datenverbindungen ist es möglich, Zwischeninformationen in Form von sogenannten Intermediate-CDRs bzw. -Nachrichten zu erzeugen. Das Triggerkriterium hierbei kann sowohl das Erreichen einer bestimmten Effektivzeitspanne als auch eine bestimmte Anzahl von Effektivzeitintervallen sein. Zusätzlich zur Effektivzeit bzw. Effektivzeitintervallen wird für diesen Messzeitraum die durchschnittliche Datenrate ermittelt.

Für den Fall, dass eine zu messende Datenübertragung, das heißt ein zu messender IP-Flow und damit der Messpunkt in einen anderen Netzknoten verschoben wird, wie beispielsweise bei GPRS bei einem SGSN Wechsel, muss die verbleibende Restzeit des momentan aktiven Effektivzeitintervalls zum neuen Netzknoten übermittelt werden. Andererseits beträgt die Ungenauigkeit pro Netzknotenwechsel maximal 1 Effektivzeitintervall.

Das erfindungsgemäße Verfahren ist in jedem Netzelement, das heißt beispielsweise in einem SGSN, einem GGSN, einer 3GPP "Traffic Plane Function" und ähnlichen Netzelementen im WLAN, PDGW, Gateways und "Sniffer" anwendbar. Als Sniffer werden - Netzelemente bezeichnet, die in einem Datenstrom "hineinschnüffeln" und Protokollanalyse betreiben, ohne jedoch aktiv den Datenstrom zu beeinflussen, also keine Schaltsondern eine Tracefunktion haben.

Ferner ist das erfindungsgemäße Verfahren auch anwendbar im Zusammenhang mit sogenannten Offline Charging Methoden, das heißt beispielsweise für die Erzeugung von Charging Data Records (CDR), als auch mit sogenannten Online Charging Methoden, das heißt beispielsweise CAMEL, Radius oder Diameter.

Weitere Vorteile des erfindungsgemäßen Verfahrens werden anhand der folgenden Figuren näher erläutert. Es zeigen

Fig. 1 Schematische Darstellung eines Ablaufs einer Ausführungsform des erfindungsgemäßen Verfahrens;

Fig. 2 Schematische Darstellung eines Ablaufs einer weiteren Ausführungsform des erfindungsgemäßen Verfahrens.

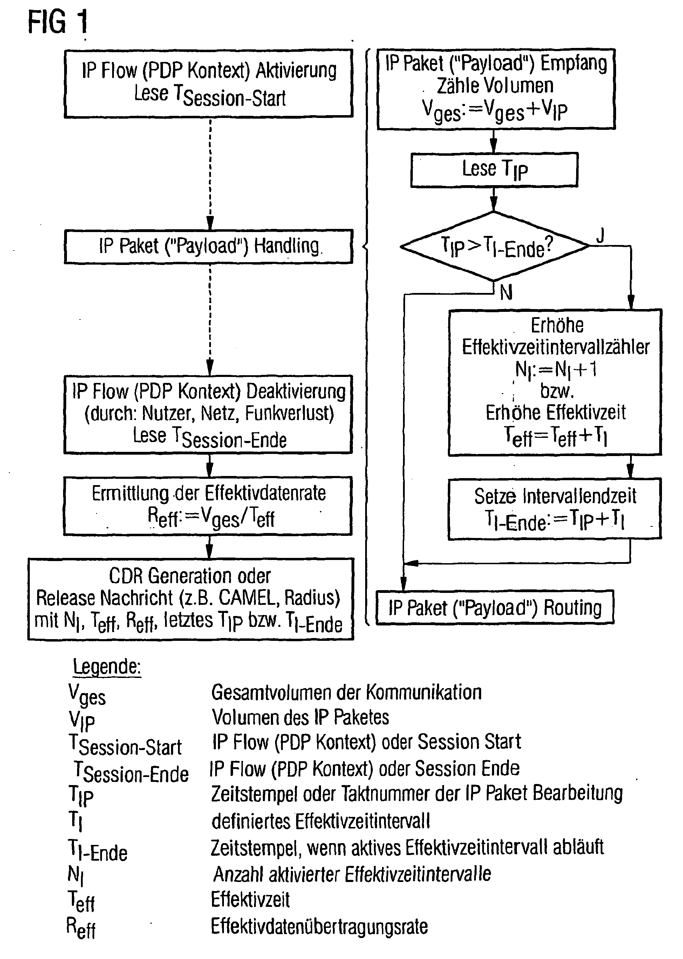

Figur 1 zeigt schematisch einen Ablauf einer Ausführungsform des erfindungsgemäßen Verfahrens. Zunächst wird eine Datenübertragung zwischen einem ersten und einem zweiten IP-Endpunkt in Form von Datenpaketen bzw. IP-Paketen gestartet bzw. ein IP Flow in Form eines PDP Kontextes aktiviert. Das erste Datenpaket bzw. IP Paket wird an einer Erfassungsstelle am Übertragungskanal empfangen und zur Datenvolumenbestimmung mit einem Volumen $V_{IP}$ erfasst. Ferner wird dort ein erstes Effektivzeitintervall $T_I$ getriggert und aktiviert. Dieses erste Effektivzeitintervall wird ebenfalls von der Erfassungsstelle erfasst und gezählt. Ein zweites und jedes weitere IP Paket der aktivierten Datenübertragung, das an der Erfassungsstelle empfangen wird, wird dort zunächst zum Datenvolumen $V_{ges}$ zugezählt. Das Volumen kann dabei sowohl in Paketen als auch in Bytes oder aber in beiden Einheiten parallel gezählt werden. Ferner wird überprüft, ob das aktivierte Effektivzeitintervall $T_I$ noch andauert oder bereits abgelaufen ist. Die Länge eines Effektivzeitintervalls $T_I$ kann von einem entsprechenden Betreiber definiert werden. Ist kein Effektivzeitintervall mehr aktiviert, wird ein neues Effektivzeitintervall aktiviert und gezählt ($N_I$) bzw. über die Intervalllänge $T_I$ in Effektivzeit $T_{eff}$ umgewandelt. Datenpakete bzw. IP Pakete, die innerhalb eines aktivierten Effektivzeitintervalls $T_I$ geroutet werden, haben keinen Einfluss auf die laufende Effektivzeitmessung. Erst nach Ablauf eines aktivierten Effektivzeitintervalls führt das nächste Datenpaket bzw. IP Paket zum Neubeginn des beschriebenen Vorgangs. Die Anzahl der Effektivzeitintervalle $N_I$ bzw. die abgeleitete Effektivzeit $T_{eff} = N_I \cdot T_I$ kann sodann als Basis für die Gebührenfestlegung herangezogen werden, sobald die Datenübertragung oder eine vordefinierte Zwischengröße (Intermediate Record) abgeschlossen ist. Ferner lässt sich als Gebührenkriterium eine durchschnittliche Datenrate über die Effektivzeit $T_{eff}$ sowie dem erfassten Volumen $V_{ges}$ ermitteln, nämlich in Form von $R_{eff} = V_{ges} / T_{eff}$.

Jedem Datenpaket oder IP Paket kann eine sogenannte Systemzeit $T_{IP}$ zugeordnet werden. Die Systemzeit $T_{IP}$ entspricht einem Zeitstempel des Beginns der Bearbeitung des entsprechenden Datenpakets bzw. IP-Pakets. $T_{IP}$ wird ermittelt, indem zum Zeitpunkt des Erkennens eines Datenpakets bzw. IP Pakets in einer Vermittlungssoftware die Systemzeit abgefragt wird. Dies erfolgt üblicherweise über Betriebssystem-Funktionsaufrufe. Jedes Netzwerk hat eine absolute Systemzeit, die entweder als Takte seit einem fest definierten Anfangsstempel oder als eine Kalender- und Uhrfunktion verwaltet wird. Mit der Systemzeit werden alle vermittlungstechnischen Aktionen bewertet, um sie beispielsweise einer Tarifzeit zuordnen zu können. Wird nun von einem IP Paket ein neues Effektivzeitintervall aktiviert, so ergibt sich die Berechnung der Effektivzeitintervallendzeit als Summe aus der Systemzeit $T_{IP}$ des entsprechenden IP Paketes und der Intervalllänge $T_I$:

$$T_{IEnd} = T_{IP} + T_I.$$

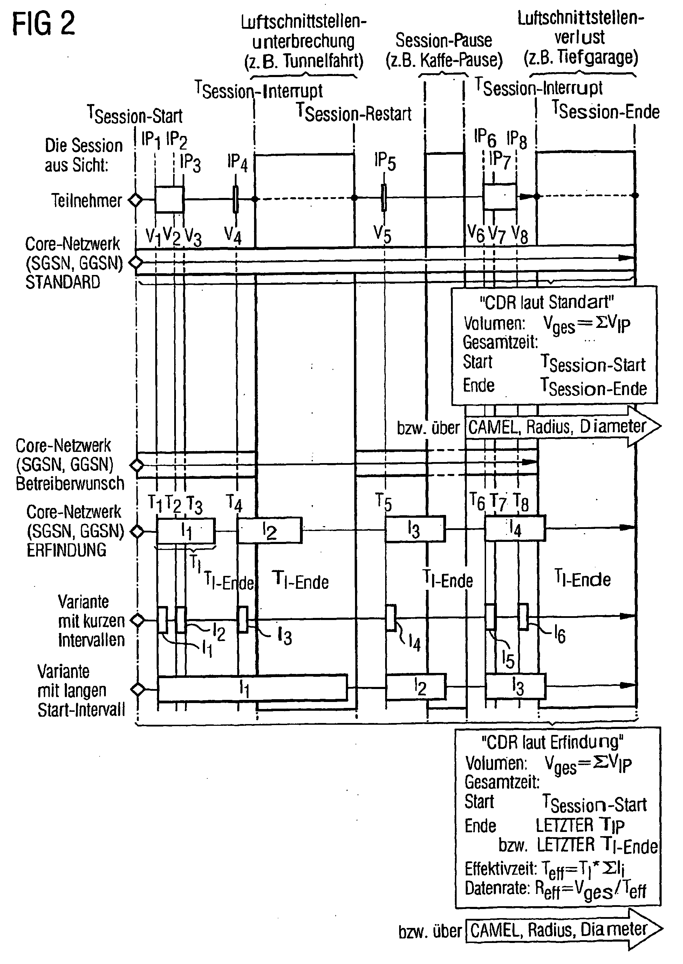

Figur 2 zeigt in schematischer Darstellung ein weiteres Ausführungsbeispiel für das erfindungsgemäße Verfahren. Dargestellt ist ein zeitlicher Verlauf einer Datenübertragung bzw. eines PDP Kontextes in GPRS, wobei im unteren Abschnitt 3 das Ausführungsbeispiel des erfindungsgemäßen Verfahrens, im oberen Abschnitt 1 die bisher standardisierte, implementierte und eingesetzte Lösung und im mittleren Abschnitt 2 eine Betreiberwunschlösung dargestellt ist. Ein Teilnehmer aktiviert zum Zeitpunkt $T_{Session-Start}$ eine Datenverbindung, wobei er zeitlich verteilt eine Datenübertragung durchführt. Das bedeutet, dass zu Zeitpunkten $T_{IP}$ Datenpakete IP mit einem Volumen $V_{IP}$ übertragen werden. Die Datenübertragung wird im dargestellten Beispiel durch bewusste und/oder unbeeinflussbare Inaktivitäten unterbrochen. Dabei kann es sich beispielsweise um eine Luftschnittstellenunterbrechung wie beispielsweise eine Tunnelfahrt handeln. Eine bewusste Inaktivität wäre beispielsweise eine Kaffeepause. Während diesen Zeiten, die zwischen den hier als $T_{session-Interrupt}$ und $T_{session-Restart}$, bzw. $T_{session-Interrupt}$ und $T_{session-Ende}$ bezeichneten Zeitpunkten liegen, werden keine IP Pakete übertragen. Nach dem standardisierten Verfahren (1) wird dem Teilnehmer das gesamte Volumen sowie die gesamte Verbindungsdauer in Rechnung gestellt. Ein Betreiber hingegen wünscht eine Lösung (2), in der, die von dem Teilnehmer unverantworteten Netzwerkeinflüsse nicht in die Gebührenrechnung eingehen. Dies ist aber aufgrund einer fehlenden bzw. auch unmöglichen Signalisierung nicht lösbar. Auch eine Differenzierung von Teilnehmerverhalten bedingten Pausen ist insbesondere im PS-Netzwerk als Zugangs- und Transportnetzwerk funktional und technisch nicht eineindeutig lösbar. In den Erfassungsstellen des Netzwerks, das heißt in Netzelementen wie beispielsweise SGSN oder GGSN, besteht nicht permanent Kenntnis über den Zustand einer entsprechenden Luftschnittstelle und damit der Gesamtheit der betreffenden Verbindung. Dieser Zustand lässt sich nur in größeren Abständen über verschiedene Signalisierungen feststellen oder über in Downlink-Richtung wie beispielsweise aus dem Internet, ankommende Daten, die nicht der Mobilstation zugestellt werden können. In einer Phase der Inaktivität kann jedoch nicht gesagt werden, ob der Teilnehmer potentiell erreichbar wäre oder ob er tatsächlich keine Verbindung mehr herstellen kann. Aber gerade für kostengünstige "Always Online" Dienste ist es erforderlich, eine effektive Nutzungszeit zu berechnen.

Dafür kann das erfindungsgemäße Verfahren (3) verwendet werden. Gemäß dem erfindungsgemäßen Verfahren werden nur die Effektivzeitintervalle erfasst, dass heißt die Zeitintervalle, in welchen effektiv Datenpakete bzw. IP Pakete übertragen werden. Dabei können die Intervallgrößen $T_I$ flexibel vom Betreiber entsprechend seiner Tariffierung gewählt werden. Phasen jeglicher Nutzerinaktivität bzw. Verbindungsverlust werden nach Ablauf eines letzten Effektivzeitintervalls nicht erfasst. Spätestens zum Zeitpunkt des endgültigen Verbindungsende wird die durchschnittliche Datenrate ermittelt. Die bisherige Gesamtzeit der Datenverbindung kann über das Ende des letzten erfassten Intervalls korrigiert werden. Das erfindungsgemäße Verfahren ist unabhängig für jegliche Art der Bereitstellung, das heißt sowohl über CDR wie auch über CAMEL oder Radius oder Diameter. Durch die Messwerte, die sich bei Durchführung des erfindungsgemäßen Verfahrens ergeben, stehen dem Betreiber eine Reihe neuer Grund-Gebührenmodelle zur Verfügung. So kann er beispielsweise eine rein zeitbasierende Vergebührung vornehmen, wobei er als Anfangspunkt den Aktivierungszeitpunkt der Datenverbindung $T_{session\text{-}Start}$ nimmt, aber anstelle des Endpunktes der entsprechenden Datenverbindung $T_{session\text{-}End}$ bzw. des PDP-Kontextes den Endzeitpunkt des letzten Effektivzeitintervalls $T_{I\text{-}Ende}$ oder alternativ dazu den Zeitpunkt des Auftretens des letzten IP Paketes $T_{IP}$.

Ferner kann er auf Basis der Effektivzeit $T_{eff}$ oder der Effektivzeitintervalle $N_I$, welche Gebühreneinheiten entsprechen, eine Vergebührung vornehmen. Ferner kann er die beiden vorgenannten Modelle kombinieren und eine Vergebührung der Gesamtdauer vornehmen, wobei er eine Unterteilung vornimmt in nutzungsinaktive Phasen, was der Differenz der Gesamtdauer und der Effektivzeit entspricht, und nutzungsaktive Phasen. Die nutzungsinaktive Phasen kann er dann mit einer niedrigeren Grundgebühr in Rechnung stellen, die nutzungsaktiven Phasen entsprechend höher vergebühren. Ferner kann er auch noch als zusätzlichen Parameter die ermittelbare durchschnittliche Datenrate einfließen lassen.

In die vorgenannten Modelle können auch noch weitere Parameter wie beispielsweise QoS Klasse und Tarifzeiten einfließen.

Die verwendeten Messgrößen Effektivzeit $T_{eff}$ bzw. Effektivzeitintervallzahl $N_I$ sowie die durchschnittliche Datenrate $R_{eff}$ mittels des Datenvolumens sind als Basismessgrößen für eine Mindesttariffierung sehr gut geeignet, insbesondere wo keine Diensttyp-Information zur Vergebührung verfügbar, wie beispielsweise beim einfachen Internet-Zugang, wo der Betreiber nur den Träger bereitstellt, bzw. vorhanden ist, oder wie beispielsweise bei VoIP oder beim Video Call. Aber auch eine Vergebührung kombiniert mit Dienste-Information beispielsweise aus einem betreibereigenen bzw. -kooperierenden ISP ist möglich.

Besonders im Fall von Roaming-Szenarien, wo keinerlei Dienst-Information dem Betreiber des besuchten PS-Netzwerkes zur Verfügung stehen, sind die Messwerte durch die Dienstunabhängigkeit und Relativierung von Niedrig- und Hoch-Volumen Diensten für eine moderate Vergebührung vorteilhaft.

## Patentansprüche

1. Verfahren zur Effektivzeitmessung einer bidirektionalen während einer Zeitspanne ($T_{eff}$) stattfindenden Datenübertragung in Form von Datenpaketen über ein paketbasiertes Netzwerk, wobei an mindestens einer Erfassungsstelle am Übertragungskanal zwischen einem ersten und einem zweiten Endpunkt für die aus einer Mehrzahl von Zeitintervallen ($T_r$) bestehende Zeitspanne ($T_{eff}$) der bidirektionalen Datenübertragung alle Zeitintervalle ($T_I$) erfasst werden, in welchen Datenpakete ($IP_1$, $IP_2$, $IP_3$, $IP_4$, $IP_5$, $IP_6$, $IP_7$, $IP_8$) zwischen dem ersten und dem zweiten Endpunkt übertragen werden,
**dadurch gekennzeichnet,**
**dass** die Zahl der Zeitintervalle ($T_I$), in welchen Datenpakete ($IP_1$, $IP_2$, $IP_3$, $IP_4$, $IP_5$, $IP_6$, $IP_7$, $IP_8$) zwischen dem ersten und dem zweiten Endpunkt übertragen werden, bestimmt und als Maß für eine Vergebührung der bidirektionalen Datenübertragung verwendet wird.

2. Verfahren nach Anspruch 1,
**dadurch gekennzeichnet,**
**dass** die Zeitintervalle ($T_I$), in welchen Datenpakete ($IP_1$, $IP_2$, $IP_3$, $IP_4$, $IP_5$, $IP_6$, $IP_7$, $IP_8$) zwischen dem ersten und dem zweiten Endpunkt übertragen werden, jeweils eine definierte und einstellbare Größe haben.

3. Verfahren nach Anspruch 1 oder 2,
**dadurch gekennzeichnet,**
**dass** jedes der Zeitintervalle ($T_I$), in welchen Datenpakete ($IP_1$, $IP_2$, $IP_3$, $IP_4$, $IP_5$, $IP_6$, $IP_7$, $IP_8$) zwischen dem ersten und dem zweiten Endpunkt übertragen werden, als eine Gebühreneinheit verwendet wird.

4. Verfahren nach einem der Ansprüche 1 bis 3,
**dadurch gekennzeichnet,**
**dass** ein den übertragenen Datenpaketen ($IP_1$, $IP_2$, $IP_3$, $IP_4$, $IP_5$, $IP_6$, $IP_7$, $IP_8$) entsprechendes Datenvolumen der bidirektionalen Datenübertragung bestimmt und zusammen mit der Zahl der Zeitintervalle ($T_I$) einer arithmetischen Verarbeitung unterzogen wird.

5. Verfahren nach Anspruch 4,
**dadurch gekennzeichnet,**
**dass** die arithmetische Verarbeitung einer Quotientenbildung entspricht, wobei der Dividend gleich dem den übertragenen Datenpaketen ($IP_1$, $IP_2$, $IP_3$,

IP$_4$, IP$_5$, IP$_6$, IP$_7$, IP$_8$) entsprechenden Datenvolumen und der Divisor gleich einem Produkt aus der Zahl und der Größe der Zeitintervalle (T$_I$) ist.

## Claims

1. Method for measuring the effective time for a bidirectional data transmission, taking place during a time period (T$_{eff}$), in the form of data packets via a packet-based network, wherein at least one point of capture on the transmission channel between a first and a second terminal point is used to capture, for the time period (T$_{eff}$), comprising a plurality of time intervals (T$_I$), of the bidirectional data transmission, all time intervals (T$_I$) in which data packets (IP$_1$, IP$_2$, IP$_3$, IP$_4$, IP$_5$, IP$_6$, IP$_7$, IP$_8$) are transmitted between the first and the second terminal point, **characterized in that** the number of time intervals (T$_I$) in which data packets (IP$_1$, IP$_2$, IP$_3$, IP$_4$, IP$_5$, IP$_6$, IP$_7$, IP$_8$) are transmitted between the first and the second terminal point is determined and is used as a measure for charging for the bidirectional data transmission.

2. Method according to Claim 1, **characterized in that** the time intervals (T$_I$) in which data packets (IP$_1$, IP$_2$, IP$_3$, IP$_4$, IP$_5$, IP$_6$, IP$_7$, IP$_8$) are transmitted between the first and the second terminal point each have a defined and adjustable magnitude.

3. Method according to Claim 1 or 2, **characterized in that** each of the time intervals (T$_I$) in which data packets (IP$_1$, IP$_2$, IP$_3$, IP$_4$, IP$_5$, IP$_6$, IP$_7$, IP$_8$) are transmitted between the first and the second terminal point is used as a charging unit.

4. Method according to one of Claims 1 to 3, **characterized in that** a volume of data, corresponding to the transmitted data packets (IP$_1$, IP$_2$, IP$_3$, IP$_4$, IP$_5$, IP$_6$, IP$_7$, IP$_8$), for the bidirectional data transmission is determined and is subjected to arithmetic processing together with the number of time intervals (T$_I$).

5. Method according to Claim 4, **characterized in that** the arithmetic processing corresponds to quotient formation, the dividend being equal to the volume of data which corresponds to the transmitted data packets (IP$_1$, IP$_2$, IP$_3$, IP$_4$, IP$_5$, IP$_6$, IP$_7$, IP$_8$) and the divisor being equal to a product of the number and magnitude of the time intervals (T$_I$).

## Revendications

1. Procédé pour mesurer la durée effective d'une transmission de données bidirectionnelle qui a lieu pendant un laps de temps (T$_{eff}$) sous la forme de paquets de données sur un réseau orienté paquets, Dans lequel, à au moins un point de détection sur le canal de transmission entre un premier et un deuxième point terminal pour le laps de temps (T$_{eff}$) de la transmission de données bidirectionnelle constitué d'une pluralité d'intervalles de temps (T$_I$), tous les intervalles de temps (T$_I$) dans lesquels des paquets de données (IP$_1$, IP$_2$, IP$_3$, IP$_4$, IP$_5$, IP$_6$, IP$_7$, IP$_8$) sont transmis entre le premier et le deuxième point terminal sont détectés **caractérisé en ce que** le nombre des intervalles de temps (T$_I$), dans lesquels des paquets de données (IP$_1$, IP$_2$, IP$_3$, IP$_4$, IP$_5$, IP$_6$, IP$_7$, IP$_8$) sont transmis entre le premier et le deuxième point terminal est déterminé et utilisé comme mesure de facturation de la transmission de données bidirectionnelle.

2. Procédé selon la revendication 1, **caractérisé en ce que** les intervalles de temps (T$_I$), dans lesquels des paquets de données (IP$_1$, IP$_2$, IP$_3$, IP$_4$, IP$_5$, IP$_6$, IP$_7$, IP$_8$) sont transmis entre le premier et le deuxième point terminal ont chacun une taille définie et réglable.

3. Procédé selon la revendication 1 ou 2, **caractérisé en ce que** chacun des intervalles de temps (T$_I$) dans lesquels des paquets de données (IP$_1$, IP$_2$, IP$_3$, IP$_4$, IP$_5$, IP$_6$, IP$_7$, IP$_8$) sont transmis entre le premier et le deuxième point terminal est utilisé comme unité de facturation.

4. Procédé selon l'une des revendications 1 à 3, **caractérisé en ce qu'**un volume de données de la transmission de données bidirectionnelle, correspondant aux paquets de données (IP$_1$, IP$_2$, IP$_3$, IP$_4$, IP$_5$, IP$_6$, IP$_7$, IP$_8$) transmis, est déterminé et soumis à un traitement arithmétique conjointement avec le nombre des intervalles de temps (T$_I$).

5. Procédé selon la revendication 4, **caractérisé en ce que** le traitement arithmétique correspond à une formation de quotient, le dividende étant égal au volume de données qui correspond aux paquets de données transmis (IP$_1$, IP$_2$, IP$_3$, IP$_4$, IP$_5$, IP$_6$, IP$_7$, IP$_8$) et le diviseur étant égal à un produit du nombre et de la taille des intervalles de temps (T$_I$).

# FIG 1

```
┌─────────────────────────────────┐        ┌─────────────────────────────────┐
│  IP Flow (PDP Kontext) Aktivierung│        │  IP Paket ("Payload") Empfang    │
│     Lese T_Session-Start          │        │      Zähle Volumen               │
└─────────────────────────────────┘        │   V_ges := V_ges + V_IP          │
                │                            └─────────────────────────────────┘
                │                                          │
                ▼                                          ▼
┌─────────────────────────────────┐             ┌──────────────────┐
│   IP Paket ("Payload") Handling  │             │    Lese T_IP     │
└─────────────────────────────────┘             └──────────────────┘
                │                                          │
                │                                          ▼
                │                          ◁── T_IP > T_I-Ende? ──▷  J
                │                                       │ N
                ▼                                       │            ▼
┌─────────────────────────────────┐        ┌─────────────────────────────────┐
│  IP Flow (PDP Kontext) Deaktivierung│      │         Erhöhe                   │
│  (durch: Nutzer, Netz, Funkverlust)│      │  Effektivzeitintervallzähler     │
│     Lese T_Session-Ende           │        │        N_I := N_I + 1            │
└─────────────────────────────────┘        │           bzw.                   │
                │                            │     Erhöhe Effektivzeit          │
                ▼                            │     T_eff = T_eff + T_I          │
┌─────────────────────────────────┐        └─────────────────────────────────┘
│  Ermittlung der Effektivdatenrate │                     │
│      R_eff := V_ges / T_eff       │                     ▼
└─────────────────────────────────┘        ┌─────────────────────────────────┐
                │                            │    Setze Intervallendzeit        │
                ▼                            │   T_I-Ende := T_IP + T_I         │
┌─────────────────────────────────┐        └─────────────────────────────────┘
│       CDR Generation oder         │                     │
│ Release Nachricht (z.B. CAMEL, Radius)│   ┌─────────────────────────────────┐
│ mit N_I, T_eff, R_eff, letztes T_IP bzw. T_I-Ende│ │ IP Paket ("Payload") Routing │
└─────────────────────────────────┘        └─────────────────────────────────┘
```

<u>Legende:</u>

| | |
|---|---|
| $V_{ges}$ | Gesamtvolumen der Kommunikation |
| $V_{IP}$ | Volumen des IP Paketes |
| $T_{Session-Start}$ | IP Flow (PDP Kontext) oder Session Start |
| $T_{Session-Ende}$ | IP Flow (PDP Kontext) oder Session Ende |
| $T_{IP}$ | Zeitstempel oder Taktnummer der IP Paket Bearbeitung |
| $T_I$ | definiertes Effektivzeitintervall |
| $T_{I-Ende}$ | Zeitstempel, wenn aktives Effektivzeitintervall abläuft |
| $N_I$ | Anzahl aktivierter Effektivzeitintervalle |
| $T_{eff}$ | Effektivzeit |
| $R_{eff}$ | Effektivdatenübertragungsrate |

# FIG 2

Luftschnittstellenunterbrechung
(z.B. Tunnelfahrt)

Session-Pause
(z.B. Kaffe-Pause)

Luftschnittstellenverlust
(z.B. Tiefgarage)

$^T$Session-Interrupt

$^T$Session-Interrupt

$^T$Session-Start

$^T$Session-Restart

$^T$Session-Ende

Die Session
aus Sicht:

$IP_1$ $IP_2$

$IP_3$

$IP_4$

$IP_5$

$IP_6$ $IP_8$

$IP_7$

Teilnehmer

Core-Netzwerk
(SGSN, GGSN)
STANDARD

$V_1$ $V_2$ $V_3$

$V_4$

$V_5$

$V_6$ $V_7$ $V_8$

"CDR laut Standart"
Volumen: $V_{ges} = \Sigma V_{IP}$
Gesamtzeit:
Start        $^T$Session-Start
Ende        $^T$Session-Ende

bzw. über CAMEL, Radius, Diameter ▷

Core-Netzwerk
(SGSN, GGSN)
Betreiberwunsch

Core-Netzwerk
(SGSN, GGSN)
ERFINDUNG

$T_1$ $T_2$ $T_3$    $T_4$

$T_5$

$T_6$ $T_7$ $T_8$

$I_1$        $I_2$        $I_3$        $I_4$

$T_I$

$T_I$-Ende    $T_I$-Ende    $T_I$-Ende    $T_I$-Ende

Variante
mit kurzen
Intervallen

$I_2$    $I_3$

$I_1$

$I_4$

$I_5$

$I_6$

Variante
mit langen
Start-Intervall

$I_1$        $I_2$        $I_3$

"CDR laut Erfindung"
Volumen: $V_{ges} = \Sigma V_{IP}$
Gesamtzeit:
Start        $^T$Session-Start
Ende        LETZTER $T_{IP}$
            bzw. LETZTER $T_I$-Ende
Effektivzeit: $T_{eff} = T_I * \Sigma I_i$
Datenrate: $R_{eff} = V_{ges} / T_{eff}$

bzw. über CAMEL, Radius, Diameter ▷

**EP 1 665 631 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9965186 A1
- DE 19755870 A1
- WO 9957856 A2
- WO 9957856 A